# EUROPEAN PATENT APPLICATION

(11) **EP 4 226 891 A1**
(43) Date of publication of application: **16.08.2023**
(21) Application number: 20957822.8
(22) Date of filing: 26.11.2020
(51) Int. Cl.: A61C 8/00, B29C 65/70, A61C 13/08, A61C 13/087, B29L 31/00

(54) **DENTAL IMPLANT HAVING FORM IN WHICH ABUTMENT AND PROTHESIS ARE INTEGRALLY CONNECTED, AND MANUFACTURING METHOD FOR SAME**

(30) Priority: 12.10.2020 KR 20200131239
(71) Applicant: Hass Co., Ltd., Gangwon-do 25452 (KR)
(72) Inventor: LIM, Hyung Bong, Ansan-si Gyeonggi-do 15521 (KR); KIM, Yong Su, Gangneung-si Gangwon-do 25497 (KR); JEON, Hyun Jun, Busan 47508 (KR); KIM, Joon Hyung, Anseong-si Gyeonggi-do 17560 (KR); KOH, Hwan Soon, Anyang-si Gyeonggi-do 13910 (KR)
(74) Representative: Gulde & Partner
(86) International application number: PCT/KR2020/016945
(87) International publication number: WO 2022/080578

(57) **Abstract**

Proposed is a dental implant, and a manufacturing method for the same, the dental implant having a form in which, in order to increase the strength of connection between a metallic abutment and a dental prosthesis, the abutment and the prosthesis are integrally connected, wherein the prosthesis and the abutment are integrally connected to each other by means of a forming method.

## Description

### Technical Field

The present disclosure relates to a dental implant having a form in which an abutment and a prosthesis are integrally connected, wherein the dental implant is configured to increase the strength of connection between a metal abutment and a dental prosthesis, and a manufacturing method for the same.

### Background Art

A dental implant refers to an artificial tooth structure formed by implanting an artificial tooth root in the area of partial or total tooth loss, attaching the artificial tooth root to the alveolar bone, and fixing a dental prosthesis to the artificial tooth root.

In general, a dental implant includes a fixture which is implanted in the alveolar bone and serves as an artificial tooth root, an abutment coupled to the fixture and disposed on a patient's gum, and a dental prosthesis connected to the abutment.

The fixture may be referred to as a fixing body which is configured to support an artificial tooth by being implanted in the alveolar bone of a tooth region in which a tooth is missing, such as the tooth root of a natural tooth.

The abutment may be configured to connect the fixture implanted in the alveolar bone with the dental prosthesis.

The dental prosthesis may be configured to be fixed in an oral cavity by the abutment to reproduce the same shape and function as the natural tooth.

Meanwhile, the dental prosthesis and the abutment are coupled to each other by a connecting method using adhesive. That is, the dental prosthesis and the abutment are generally connected to each other by a cement retained prosthesis (CRP) method using cement.

However, the CPR method has the advantage that a procedure thereof is relatively simple and can be applied without looking different from surrounding natural teeth in terms of appearance, but has the problem that there is a possibility of causing inflammation due to excess cement and the dental prosthesis is separated when the cement dissolves.

Therefore, the present applicant has proposed the present disclosure to solve the above problems, and as a related prior art, there is "IMPLANT FOR ARTIFICIAL TEETH WITH IMPROVED FIXATION STRUCTURE AND IMPACT RELAXATION STRUCTURE" disclosed in Korean Patent No. 10-2048180.

### Disclosure

### Technical Problem

The present disclosure has been made to solve the above-mentioned problems, and is intended to propose a dental implant which is configured to facilitate connection between an abutment and a dental prosthesis and to increase a force of connection therebetween, and a manufacturing method for the same.

### Technical Solution

The present disclosure provides a dental implant having a form in which an abutment and a prosthesis are integrally connected to each other, wherein the abutment and the prosthesis may be integrally connected to each other by a forming method.

In addition, the prosthesis may be manufactured of resin cured after the resin is injected into a forming mold in which the abutment is disposed.

Furthermore, the forming mold may include a first mold, wherein the first mold may include a cavity in which the resin is filled; and a vertical shaft which is provided in a central part of the cavity and is inserted into a hole formed in the abutment so as to support the abutment.

Additionally, the forming mold may include a second mold which blocks an open upper part of the first mold, wherein without interfering with the abutment, the second mold may block the open upper part of the cavity formed in the first mold.

In addition, the cavity may have a shape corresponding to a shape of a tooth to be manufactured, or have a shape of a cylinder or hexahedron.

Furthermore, a longitudinal first portion of the abutment coupled to the vertical shaft may be disposed inside the cavity, and a longitudinal second portion of the abutment may be disposed outside the cavity.

Additionally, the dental implant may include: an undercut-shaped groove part formed in a boundary portion between the longitudinal first portion of the abutment and the longitudinal second portion thereof, wherein the resin may be introduced into the groove part and be cured.

In addition, the dental implant may include: a contact surface increasing part provided in the longitudinal first portion of the abutment, wherein the contact surface increasing part may have a shape of threads and be provided in an entirety or portion of the first portion of the abutment.

Furthermore, the dental implant may include: an inorganic filler which is mixed with the resin and is injected into the forming mold, wherein content of the inorganic filler may be 50 to 60% by mass, and the inorganic filler may have a particle diameter of 0.1um to 10um.

Additionally, a manufacturing method of the dental implant according to the present disclosure includes: injecting resin into the cavity formed in the forming mold so that the cavity is filled with the resin; disposing the abutment in the cavity filled with the resin in the injecting; curing the resin filled in the cavity; and removing the prosthesis formed by hardening the resin in the curing and the abutment from the forming mold.

### Advantageous Effects

According to the dental implant having a form in which an abutment and a prosthesis are integrally connected and the manufacturing method for the same according to the present disclosure, the prosthesis and the abutment are integrally connected to each other by a forming method using the forming mold, thereby increasing the strength of connection between the prosthesis and the abutment and promoting durability.

In addition, according to the dental implant having a form in which an abutment and a prosthesis are integrally connected, and the manufacturing method for the same according to the present disclosure, the abutment can be connected to the prosthesis in the process of manufacturing the prosthesis, and thus a separate physical connecting process is not required, thereby providing the convenience of manufacturing of the dental implant and lowering a manufacturing cost thereof.

In addition, according to the dental implant having a form in which an abutment and a prosthesis are integrally connected, and the manufacturing method for the same according to the present disclosure, a structure that can be directly implanted into a fixture is provided according to the shape of the cavity of the forming mold in which the prosthesis is formed, thereby providing the convenience of an implant procedure.

Furthermore, according to the dental implant having a form in which an abutment and a prosthesis are integrally connected, and the manufacturing method for the same according to the present disclosure, the prosthesis and the abutment are integrally coupled to each other without a connecting method using cement or a physical forcible fitting method, thereby preventing inflammation due to excess cement and significantly reducing defect rate occurring in a connecting process.

### Description of Drawings

FIG. 1 is a separated sectional view of a forming mold used for integrally coupling a prosthesis and an abutment to each other.
FIG. 2 is a sectional view showing a state in which resin for forming the prosthesis is injected into the forming mold illustrated in FIG. 1.
FIG. 3 is a perspective view illustrating a state in which the prosthesis and the abutment are removed from the forming mold illustrated in FIG. 2.
FIG. 4 is a sectional view illustrating a state in which a cavity of the forming mold is formed in the shape of a tooth.
FIG. 5 is a sectional view illustrating a state in which a contact surface increasing part is formed on the outer surface of the abutment according to the present disclosure.
FIG. 6 is a flowchart illustrating a manufacturing method of a dental implant according to one embodiment of the present disclosure.

### Mode for Invention

Advantages and characteristics of the present disclosure, and methods for achieving the same will become clear with reference to an embodiment described later in detail in conjunction with the accompanying drawings.

However, the present disclosure is not limited to the embodiment disclosed below and will be implemented in various different forms. Only the embodiment is provided to make the present disclosure complete and to fully inform the scope of the present disclosure to those skilled in the art to which the present disclosure belongs, and the present disclosure is defined by the scope of the claims.

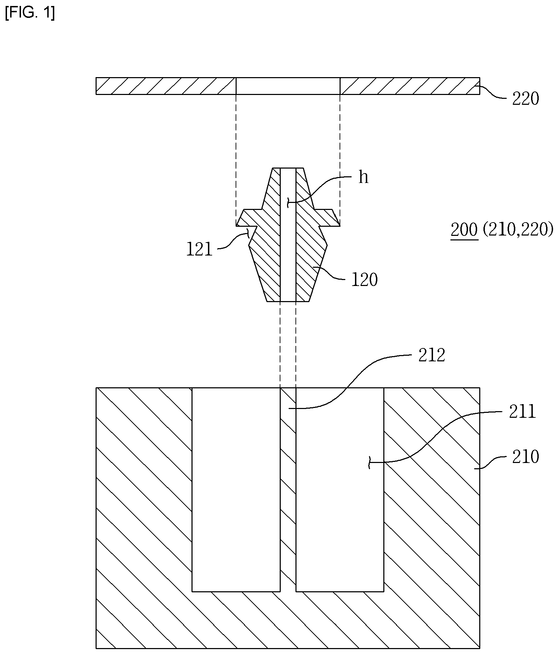

Hereinafter, a dental implant having a form in which an abutment and a prosthesis are integrally connected, and the manufacturing method for the same according to one embodiment of the present disclosure will be described in detail with reference to FIGS. 1 to 6. In describing the present disclosure, detailed descriptions of related known functions or configurations are omitted to avoid obscuring the subject matter of the present disclosure.

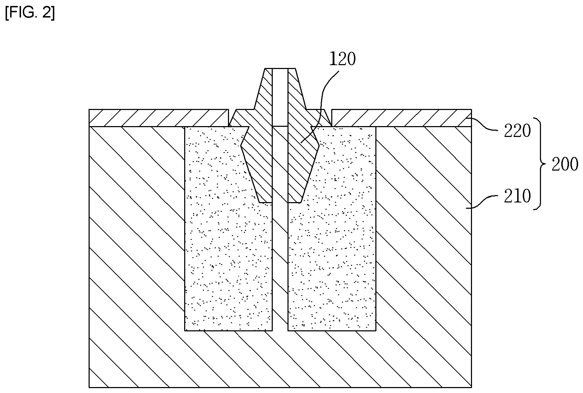

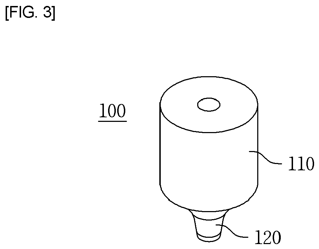

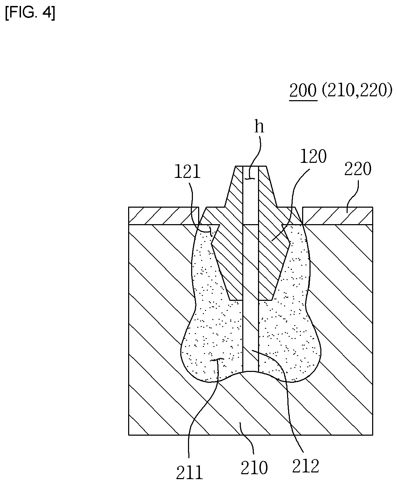

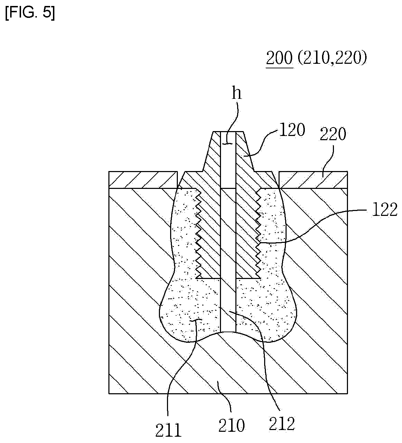

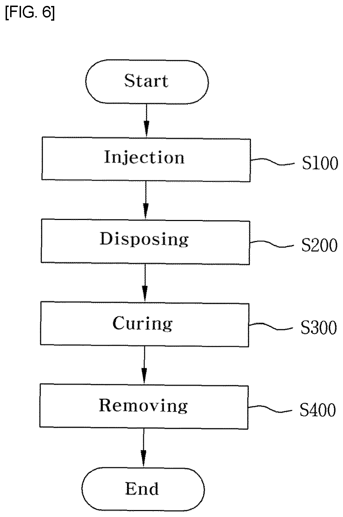

FIG. 1 is a separated sectional view of a forming mold used for integrally coupling the prosthesis and the abutment to each other, FIG. 2 is a sectional view showing a state in which resin for forming the prosthesis is injected into the forming mold illustrated in FIG. 1, FIG. 3 is a perspective view illustrating a state in which the prosthesis and the abutment are removed from the forming mold illustrated in FIG. 2, FIG. 4 is a sectional view illustrating a state in which a cavity of the forming mold is formed in the shape of a tooth, FIG. 5 is a sectional view illustrating a state in which a contact surface increasing part is formed on the outer surface of the abutment according to the present disclosure, and FIG. 6 is a flowchart illustrating a manufacturing method of the dental implant according to the embodiment of the present disclosure.

As illustrated in FIGS. 1 to 3, in the dental implant 100 according to the embodiment of the present disclosure, the prosthesis 110 and the abutment 120 are integrally connected to each other by a forming method using the forming mold 200.

That is, the prosthesis 110 is manufactured by using resin which can be formed, wherein the resin may be injected into the cavity 211 having a shape corresponding to the shape of the prosthesis 110 and then cured. In this case, the abutment 120 may be disposed in the cavity 211 of the forming mold 200. In this case, when the resin is hardened to form the prosthesis 110, the prosthesis 110 and the abutment 120 may be coupled to each other without a separate connecting process.

As illustrated in FIGS. 1 to 3, the forming mold 200 may include a first mold 210 and a second mold 220.

The first mold 210 may include the cavity 211 in which resin is injected and filled to form the prosthesis 110; and a vertical shaft 212 which is provided in a central part of the cavity 211 and is inserted into a hole h formed in the abutment 120 to support the abutment 120.

The cavity 211 may have a shape corresponding to the shape of the prosthesis 110 to be manufactured. For example, the cavity 211 may have a shape such as a cylinder or a hexahedron or may have a shape corresponding to the shape of a tooth to be manufactured as illustrated in FIGS. 4 and 5.

The vertical shaft 212 may protrude vertically from the central part of the bottom surface of the first mold 210 that partitions the cavity 211, and, as described above, may be inserted into the hole h formed in the abutment 120. For reference, the hole h may be a hole into which a screw (not shown) for coupling the abutment 120 and a fixture (not shown) to each other is inserted. That is, when the screw is inserted into the hole h and screwed to the fixture, the abutment 120 and the fixture may be coupled to each other.

The vertical shaft 211 may be inserted into the hole h formed in the abutment 120 by a forcible fitting method. Accordingly, the abutment 120 may be disposed to be fixed to a front end part of the vertical shaft 212.

In this case, a longitudinal first portion of the abutment 120 connected to the vertical shaft 212 may be disposed inside the cavity 211, and a longitudinal second portion of the abutment 120 may be disposed outside the cavity 211. The longitudinal first portion of the abutment 120 disposed inside the cavity 211 may be a part connected integrally to the prosthesis 110, and the longitudinal second portion of the abutment 120 disposed outside the cavity 211 may be considered a part connected to the fixture by the screw.

Meanwhile, resin which forms the prosthesis 110 may be injected into the cavity 211 before the abutment 120 is coupled to the vertical shaft 212, or after the vertical shaft 212 is coupled to the abutment 120.

The second mold 220 may block an open upper part of the cavity 211 formed in the first mold 210 without interfering with the abutment 120 coupled to the vertical shaft 212. That is, as illustrated in FIGS. 1 and 2, the second mold 220 may be placed on the upper surface of the first mold 210 and may prevent foreign matter from being introduced into the cavity 211 filled with the resin.

The forming mold 200 configured above may be made of a material with low deformation due to external force and excellent durability. For example, the forming mold 200 may be made of a metal material, a plastic synthetic resin material, or a graphite material but is not limited thereto, and may be made of a relatively soft material such as silicone or rubber.

Meanwhile, resin filled in the cavity 211 to form the prosthesis 110 may include a methacrylate compound or acrylate compound which has fluidity.

Resin injected into the cavity 211 may be cured by various known curing methods. For example, a natural curing method may be used, or a thermal curing method or a photo-curing method using light may be used to shorten a period of curing time.

When the resin hardens in the cavity 211 to form the prosthesis 110, the prosthesis 110 and the longitudinal first portion of the abutment 120 are coupled to each other. Next, when the longitudinal second portion of the abutment 120 is pulled after separating the second mold 220 from the first mold 210, the prosthesis 110 and the abutment 120 may be removed from the cavity 211.

In this case, as illustrated in FIG. 3, the prosthesis 110 which is hollow and the abutment 120 may be manufactured. For reference, in the embodiment of the present disclosure, the prosthesis 110 is illustrated in the drawing as having a cylindrical shape but is not limited thereto. For example, the prosthesis 110 may have the shape of a hexahedron or the shape of a tooth to be manufactured.

Accordingly, since the resin forming the prosthesis 110 is hardened in the cavity 211 while being in contact with the abutment 120, the prosthesis 110 and the abutment 120 may be naturally coupled to each other in the manufacturing process of the prosthesis 110, and accordingly, a separate connecting process is not required.

Meanwhile, as illustrated in FIG. 4, an undercut-shaped groove part 121 may be formed in a boundary portion between the longitudinal fist portion of the abutment 120 and the longitudinal second portion thereof.

The groove part 121 may be formed in the entirety of the abutment 120 in a circumferential direction thereof or in a portion of the abutment 120 in the circumferential direction thereof, and provides a predetermined space into which the resin filled in the cavity 211 can move.

Such a groove part 121 may be partitioned by an inclined surface with an inclination angle of 5 to 30 degrees. Accordingly, the force of connection between the prosthesis 110 and the abutment 120 may be further increased by the resin moving into the groove part 121, and particularly, the abutment 120 and the prosthesis 110 may be further prevented from being separated from each other in a longitudinal direction thereof.

In addition, the abutment 120 may include the contact surface increasing part 122. As illustrated in FIG. 5, the contact surface increasing part 122 may be provided on the longitudinal first portion of the abutment 120 disposed inside the cavity 211. In this case, the contact surface increasing part 122 has the shape of threads and may be provided in the entirety or portion of the first portion of the abutment 120.

The contact surface increasing part 122 configured as above may be a component which further increases the force of connection between the prosthesis 110 and the abutment 120 by providing multiple spaces into which resin filled in the cavity 211 is introduced. That is, the contact surface increasing part 122 may be a component which increases the force of connection between the prosthesis 110 and the abutment 120 by increasing an area of connection between the prosthesis 110 and the abutment 120.

Meanwhile, the resin injected into the cavity 211 is preferably mixed with an inorganic filler.

The content of the inorganic filler is preferably 50 to 60% by mass. When the content of the inorganic filler is less than 50% by mass, the surface lubricity and abrasion resistance of the prosthesis 110 become insufficient. Contrarily, when the content of the inorganic filler exceeds 60% by mass, the mechanical strength of the prosthesis 110 may decrease. Accordingly, the content of the inorganic filler is preferably 0 to 60% by mass.

In addition, the inorganic filler preferably has a particle diameter of 0.1um to 10um.

As the average particle diameter of the inorganic filler decreases, the surface of the prosthesis 110 becomes smoother. In addition, since the surface roughness of the prosthesis 110 is reduced, contamination thereof due to stains or plaques is reduced, and thus an excellent aesthetic effect can be expected. On the other hand, as the average particle diameter of the inorganic filler increases, the mechanical properties of the prosthesis 110 is better, but the surface of the prosthesis is rough and surface roughness thereof is increased, and thus the aesthetic effect thereof decreases.

Hereinafter, the manufacturing method of the dental implant 100 configured as described above will be described as an example.

As illustrated in FIG. 6, the manufacturing method of the dental implant may include injecting at S100, disposing at S200, curing at S300, and removing at S400.

First, the injecting at S100 may be injecting of resin into the cavity 211 formed in the first mold 210. In this case, the resin may contain an inorganic filler of 50 to 60% by mass.

The disposing at S200 may be the coupling of the abutment 120 to the vertical shaft 212 provided in the central part of the cavity 211. That is, the disposing may be the inserting of the vertical shaft 212 into the hole h formed in the abutment 120. That is, as illustrated in FIG. 2, the disposing may be the coupling of the vertical shaft 212 and the abutment 120 to each other so that the longitudinal first portion of the abutment 120 is disposed inside the cavity 211 and the remaining longitudinal second portion of the abutment 120 is disposed outside the cavity 211.

For reference, the disposing at S200 may be performed before resin is filled in the cavity 211 or after resin is filled in the cavity 211. That is, the disposing at S200 may be performed after the injecting at S100 is completed or before the injecting at S100 is performed.

The curing at S300 may be the curing of the resin filled in the cavity 211 while the open upper part of the cavity 211 is closed. That is, in the curing at S300, the second mold 220 is disposed on the upper surface the first mold 210 so that the open upper part of the cavity 211 can be closed. In addition, the resin filled in the cavity 211 may be cured by using a known curing method.

The removing at S400 may be the removing of the resin which is completely cured and the abutment 120 coupled to the resin from the cavity 211 of the first mold 210. The resin hardened due to the completed curing may be regarded as the prosthesis 110, and in order to remove the prosthesis 110 from the cavity 211, the longitudinal second portion of the abutment 120 disposed outside the cavity 211 may be gripped by a separate gripping tool and then pulled, so the prosthesis 110 can be removed from the first mold 210.

When the above process is completed, the prosthesis 110 and the abutment 120 in an integrally combined state can be manufactured.

Although the specific embodiment according to the present disclosure has been described so far, the embodiment may be variously modified without departing from the scope of the present disclosure.

Therefore, the scope of the present disclosure should not be limited to the described embodiment and should not be defined, but should be defined by not only the scope of the claims to be described later, but also by a scope equivalent to the scope of the claims.

### Industrial Applicability

The dental implant of the present disclosure can be applied to and sold in the medical industry.

## Claims

1. A dental implant having a form in which an abutment and a prosthesis are integrally connected to each other, the abutment and the prosthesis being integrally connected to each other by a forming method.

2. The dental implant of claim 1, wherein the prosthesis is manufactured of resin cured after the resin is injected into a forming mold in which the abutment is disposed.

3. The dental implant of claim 2, wherein the forming mold comprises a first mold,
wherein the first mold comprises a cavity in which the resin is filled; and a vertical shaft which is provided in a central part of the cavity and is inserted into a hole formed in the abutment so as to support the abutment.

4. The dental implant of claim 3, wherein the forming mold comprises a second mold which blocks an open upper part of the first mold,
wherein without interfering with the abutment, the second mold blocks the open upper part of the cavity formed in the first mold.

5. The dental implant of claim 3, wherein the cavity has a shape corresponding to a shape of a tooth to be manufactured, or has a shape of a cylinder or hexahedron.

6. The dental implant of claim 3, wherein a longitudinal first portion of the abutment coupled to the vertical shaft is disposed inside the cavity, and a longitudinal second portion of the abutment is disposed outside the cavity.

7. The dental implant of claim 6, comprising:
an undercut-shaped groove part formed in a boundary portion between the longitudinal first portion of the abutment and the longitudinal second portion thereof,
wherein the resin is introduced into the groove part and is cured.

8. The dental implant of claim 6, comprising:
a contact surface increasing part provided in the longitudinal first portion of the abutment,
wherein the contact surface increasing part has a shape of threads and is provided in an entirety or portion of the first portion of the abutment.

9. The dental implant of claim 2, comprising:
an inorganic filler which is mixed with the resin and is injected into the forming mold,
wherein content of the inorganic filler is 50 to 60% by mass, and the inorganic filler has a particle diameter of 0.1um to 10um.

10. A manufacturing method of the dental implant according to any one of claims 1 to 9, the method comprising:
injecting resin into the cavity formed in the forming mold so that the cavity is filled with the resin;
disposing the abutment in the cavity filled with the resin in the injecting;
curing the resin filled in the cavity; and
removing the prosthesis formed by hardening the resin in the curing and the abutment from the forming mold.
